# NEUE EUROPÄISCHE PATENTSCHRIFT

(11) **EP 2 268 443 B2**
(45) Veröffentlichungstag und Bekanntmachung des Hinweises auf die Entscheidung über den Einspruch: **23.06.2021**
(45) Hinweis auf die Patenterteilung: 27.02.2013
(21) Anmeldenummer: 09734997.1
(22) Anmeldetag: 02.03.2009
(51) Int. Cl.: B23K 9/04, B21B 27/03, B22D 11/128, B23K 35/02, B23K 35/30, C22C 38/48

(54) **VERFAHREN ZUR HERSTELLUNG EINER ROLLE, MIT EINER AUFTRAGSCHWEISSUNG ; VERFAHREN ZUR WIEDERHERSTELLUNG EINER ABGENÜTZTEN ROLLE MIT EINER AUFTRAGSCHWEISSUNG**
METHOD OF PRODUCING A ROLL COMPRISING A WELDED-ON SURFACE ; METHOD OF REPAIRING A USED ROLL WITH A WELDED-ON SURFACE
PROCÉDÉ DE FABRICATION D'UN ROULEAU A L'AIDE D'UN RECHARGEMENT PAR SOUDAGE ; PROCÉDÉ DE REMISE EN ÉTAT D'UN ROULEAU USÉ A L'AIDE D'UN RECHARGEMENT PAR SOUDAGE

(30) Priorität: 22.04.2008 AT 6382008
(43) Veröffentlichungstag der Anmeldung: 05.01.2011
(60) Teilanmeldung: 11184773.7
(73) Patentinhaber: Primetals Technologies Austria GmbH, 4031 Linz (AT)
(72) Erfinder: LECHNER, Stefan, A-4060 Leonding (AT); LEKIC-NINIC, Marinko, A-4030 Linz (AT); POEPPL, Johann, A-4202 Kirchschlag (AT); SHAN, Guoxin, A-4020 Linz (AT); THOENE, Heinrich, A-4020 Linz (AT); TRNKA, Karl, A-4020 Linz (AT); WIMMER, Franz, A-4752 Riedau (AT)
(74) Vertreter: Metals@Linz
(86) Internationale Anmeldenummer: PCT/EP2009/052445
(87) Internationale Veröffentlichungsnummer: WO 2009/130079

(56) Entgegenhaltungen:
- FR-A- 2 063 252
- GB-A- 1 475 300
- GB-A- 2 122 925
- GB-A- 2 368 849
- JP-A- 3 275 276
- JP-A- 10 006 001
- JP-A- 11 000 747
- JP-A- 58 184 094
- JP-A- 62 207 580
- US-A- 4 484 959
- US-A- 4 609 577
- US-A- 5 766 378

## Beschreibung

### Technisches Gebiet

Die Erfindung betrifft ein Verfahren zum Herstellen und ein Verfahren zum Wiederherstellen einer Rolle mit einer durch eine Auftragsschweißung auf dem Grundwerkstoff des Rollenmantels mit einem Schweißzusatzwerkstoff aufgebrachten Verschleißschicht gemäß dem Oberbegriff der Ansprüche 1 und 8 (siehe, z.B., JP62/207580).

Rollen dieser Art sind besonders geeignet zum Stützen und Transportieren von gegossenen Metallsträngen, insbesondere Stahlsträngen, in der Strangführung einer Stranggießanlage, unmittelbar im Anschluss an die Stranggießkokille, und auf der Gießanlage nachgeordneten Rollgängen. Speziell bei Brammenstranggießanlagen sind die Stützrollen in der Strangführung hohen mechanischen Belastungen im Hochtemperaturbereich ausgesetzt. Dies führt zu vermehrtem Verschleiß an der Rollenmanteloberfläche, zu Korrosionserscheinungen und mechanischen Beschädigungen. Rollen dieser Art sind weiters generell in metallurgischen Anlagen einsetzbar, wenn schwere und heiße Güter, wie Brammen, Blöcke, Knüppel, Bandmaterial, Walzgut, etc. zwischen einzelnen Weiterverarbeitungseinrichtungen, Speicher- und Stapeleinrichtungen, insbesondere auch im Bereich von Walzwerken, transportiert werden.

### Stand der Technik

Aus der DE 38 23 655 A1 ist bereits eine Stütz- und/oder Transportwalze zum Transport von heißen Metallsträngen in einer Stranggießanlage bekannt, die im Wesentlichen aus einem Walzenkern und einer Walzenhülse besteht, wobei diese beiden Bauteile ineinander verschraubt sind. Auf der Walzenhülse ist eine Auftragsschweißung aufgebracht, für deren Durchführung Schweißparameter so gewählt sind, dass beim Schweißen des Schutzauftrages auf die äußere Mantelfläche der Walzenhülse gleichzeitig ein Verbindungsschweißen zwischen Kern und Hülse durchgeführt wird. Die Auftragsschweißung ist durch sich eng aneinander legende Schweißraupen in Achsrichtung der Stützwalze oder in Form einer Schraubenlinie entlang der Mantelfläche der Stützwalze gebildet. Damit wird eine verschleißresistente Oberfläche und eine feste Verbindung zwischen Hülse und Kern erzielt.

Aus der DE 32 23 908 A1 ist eine Strangführungsrolle bekannt, deren Walzenkörper mit einer Auftragsschweißung versehen ist. Die Auftragsschweißung umfasst eine Vielzahl von eng aneinander angeordneten Schweißraupen, die in Umfangsrichtung des Walzenkörpers wellenförmig aufgetragen sind. Die Auftragsschweißung ist nachbearbeitet, um eine glatte, zylindrische und rissfreie Oberfläche zu erzielen. Angaben zur chemischen Zusammensetzung des Grundwerkstoffes und des Werkstoffes der aufgeschweißten Verschleißschicht hinsichtlich einer Optimierung der Materialeigenschaften der Strangführungsrolle sind dieser Schrift nicht zu entnehmen.

Aus der US 4,532,978 A ist eine Transportrolle für heiße Metallstücke mit einer durch eine Auftragsschweißung, durch eine thermische Aufspritzung oder durch eine Schrumpfverbindung erzeugte äußere Mantelschicht bekannt, wobei diese äußere Mantelschicht von einem ferritischen Stahl mit weniger als 0,1% C, 10,0 - 14,0% Cr und 0,4 - 1,0 % Nb, Rest Eisen und herstellungsbedingte Verunreinigungen, gebildet ist. Durch die Kombination der Legierungsanteile Cr und Nb wird eine verbesserte Resistenz der Oberflächenschicht einer Transportrolle hinsichtlich Korrosion, Oxidation und Rissanfälligkeit erreicht. Nähere Angaben zum strukturellen Aufbau der durch eine Auftragsschweißung gebildeten äußeren Mantelschicht sind aus diesem Dokument nicht zu entnehmen.

Auftragschweißungen sind generell durch das Aufbringen einer fest haftenden Schicht auf einer Bauteiloberfläche über den Schmelzfluss gekennzeichnet. Diese Schicht dient neben der Herstellung einer verschleißfesten Oberfläche oder deren Wiederherstellung nach einer bestimmten Einsatzzeit vor allem zum Panzern (Verschleißschutz), zum Plattieren (Korrosionsschutz) und zum Puffern (Bilden von Zwischenlagen) von Bauteiloberflächen.

Beim Auftragsschweißen dient der Bauteilgrundkörper als Träger mit ausreichend elastischen Eigenschaften, während die Beschichtung als Funktionsoberfläche das Bauteil vor Schädigungen durch intensive Beanspruchungen, bestehend aus Korrosion, Verschleiß und/oder Temperatur, schützen soll. Das Auftragschweißen vereinigt Vorteile, wie geringe Abhängigkeit von der Bauteilgeometrie, gute Haftung zwischen Trägermaterial und Beschichtung, dichte Schichten, sowie gute Wärmeleitung von der Auftragschweißung in das Bauteil. Durch den abrasiven und erosiven Verschleiß an derartigen Bauteilen, speziell an Stranggießrollen einer Stranggießanlage, werden heute erhebliche volkswirtschaftliche Verluste verursacht, die sich aus einem großen Instandhaltungsaufwand ergeben.

Um beispielsweise die geforderte Standzeit von Strangführungssrollen bezüglich Oberflächenverschleiß zu gewährleisten, die derzeit üblicherweise bei ca. 300.000 Tonnen produzierten Metallstrangs im Eingangsbereich der Strangführung (an die Kokille anschließender Bereich) bzw. 5,0 Mio Tonnen im Auslaufbereich aus der Strangführung liegt, muss eine Aufschweißung nach dem Stand der Technik folgende Eigenschaften aufweisen:
- Rostfreie Aufschweißung mit martensitischem Gefüge,
- Härte von 44 - 50 HRC,
- Hohe Korrosionsbeständigkeit der Schweißschicht durch einen Legierungsanteil von mindestens 12,5 % Cr,
- Hitze- und Brandrissbeständigkeit,
- Ein möglichst geringer Delta-Ferritanteil von max. 10%. Ideal wären 0% Delta-Ferritanteil, um eine hohe interkristalline Korrosionsfestigkeit zu gewährleisten. Aus werkstoff- und schweißtechnischen Gründen ist dies nur schwer zu erzielen. In der Praxis wird deshalb ein Delta-Ferritanteil von bis zu 10% akzeptiert.

Diese Eigenschaften sollen an der oberflächennahen Funktionsoberfläche in ausreichender Schichtdicke der durchgeführten Aufschweißung vorhanden sein, damit die Oberfläche nach Erreichen einer zulässigen Verschleißgrenze noch qualitativ hochwertig nachgearbeitet werden kann, insbesondere ohne dass der Rollenmantel im Bereich des Grundwerkstoffes beeinträchtigt oder geschwächt wird.

Die Gefügeausbildung und Beschaffenheit dieser durch Aufschweißung erzeugten oberflächennahen Funktionsoberfläche ist von der Beschaffenheit des Rollenmantel-Grundwerkstoffes, der Beschaffenheit des Schweißzusatzwerkstoffes und gegebenenfalls vom Aufschweißvorgang selbst abhängig. Während des Schweißvorganges kommt es zwischen dem aufgeschmolzenen Grundwerkstoff und dem vom Schweißdraht abschmelzenden Schweißzusatzwerkstoff zu einer Mischung der beiden Komponenten, die als Aufmischung bezeichnet wird. Der gegebene Aufmischungsvorgang des Schweißzusatzwerkstoffes mit dem Grundwerkstoff wird durch in der Praxis unvermeidliche Werkstoff- und Schweißparameterstreuung stark beeinflusst. Der Aufmischungsvorgang entscheidet allerdings wesentlich, ob obige Anforderungen an die Aufschweißung erreicht werden.

Zur Erzielung von ausreichend großen Verschleißschichten mit konstanten Materialeigenschaften, ist es beispielsweise aus der JP 10-314938 A2 bereits bekannt, Mehrlagenschweißungen durchzuführen. Damit stellt sich die Problematik der Aufmischung und damit unterschiedlicher Werkstoffeigenschaften in markanter Weise ausschließlich in der ersten Lage der Aufschweißung. In der zweiten und den weiteren Lagen der Aufschweißung tritt dieses Problem nicht mehr auf. Allerdings erhöhen sich der Arbeitszeitaufwand für die Durchführung der Aufschweißung und der notwendige Energieverbrauch durch das Schweißaggregat markant in Abhängigkeit von der Schweißlagenanzahl.

Aus der JP 11-000747 A2 ist eine Stützrolle mit einer einlagigen Aufschweißung bekannt, bei der in einem nachfolgenden Bearbeitungsvorgang lediglich Kuppen der Schweißraupen abgeschliffen werden, wodurch eine zylindrische Mantelfläche erzeugt wird, die jedoch nur in Teilbereichen eine das heiße Transportgut tragende Funktionsoberfläche aufweist. Die nicht bearbeitete Schweißraupenoberfläche verstärkt die Rissbildungsgefahr durch ungleiche Belastungsbilder und ungleichen Wärmeübergang vom heißen Transportgut in die Stützrolle. Zur Qualität der Aufschweißung, insbesondere zur Gleichmäßigkeit der Materialeigenschaften in der Aufschweißung und der Zusammensetzung des Schweißzusatzwerkstoffes fehlen entsprechende Angabe in der JP 11-000747 A2.

### Darstellung der Erfindung

Aufgabe der vorliegenden Erfindung ist es daher, die Nachteile des bekannten Standes der Technik zu vermeiden und ein Verfahren zur Herstellung und ein Verfahren zur Widerherstellung einer Rolle vorzuschlagen, wobei die Standzeit der Verschleißschicht vergrößert, die Verschleißfestigkeit verbessert und die Herstellkosten der Aufschweißung reduziert werden.

Ein Verfahren zum Herstellen einer Rolle zum Stützen und Transportieren von heißem Gut, insbesondere von stranggegossenen Stahlsträngen auf einem Rollgang oder in einer Stranggießanlage gemäß der Erfindung ist in Anspruch 1 definiert.

Zweckmäßig erfolgt das Aufbringen der Aufschweißschicht durch die einlagige Aufschweißung auf dem Grundwerkstoff des Rollenmantels oder des Rollenkörpers mit einer Mindestdicke der Aufschweißschicht von 4,0 mm oder mehr, um eine ausreichend große Verschleißschicht mit gleicher chemischer Zusammensetzung zu erzielen. Vorzugsweise erfolgt das Rückdrehen der Aufschweißschicht auf eine geschlossene einflächige Rollenmanteloberfläche bei Aufrechterhaltung einer Mindestdicke der Verschleißschicht mit gleicher chemischer Zusammensetzung von 2,5 mm oder mehr, wodurch eine entsprechend lange Standzeit der Verschleißschicht erzielt wird.

Als Grundwerkstoff des Rollenmantels wird Stahl mit bis zu 0,45% C, vorzugsweise mit 0,2 bis 0,45% C, verwendet. Für die Auftragsschweißung wird ein Schweißzusatzwerkstoff auf Eisenbasis mit einem Anteil von 16,5 bis 19,0% Cr verwendet. Zweckmäßig enthält der Schweißzusatzwerkstoff zusätzlich einen Anteil von 0,15 bis 0,20% Nb.

Zur Erzielung einer Verschleißschicht, die über einen möglichst großen Dickenbereich eine gleiche chemische Zusammensetzung aufweist, somit während des Aufschmelzvorganges der beiden Werkstoffkomponenten eine definierte Aufmischung erfolgt, ist es notwendig, den Grundwerkstoff des Rollenmantels, den Schweißzusatzwerkstoff und das verwendete Schweißverfahren mit seinen spezifischen Schweißparametern aufeinander abzustimmen. Eine unter diesen Randbedingungen optimalen, einlagigen Auftragsschweißung wird bei Verwendung des Open-Arc-Aufschweißverfahrens, des Unter-Pulver-Aufschweißverfahrens oder eines Schutzgasschweißverfahrens erreicht. Ein kostengünstiges und einfach anwendbares Aufschweißverfahren für den speziellen Anwendungsfall ist das Open-Arc-Aufschweißverfahren.

Für den Rolleneinsatz nutzbare Verschleißschichten, die über einen möglichst großen Dickenbereich mit gleichbleibender chemischer Zusammensetzung verfügen, ergeben sich, wenn erfindungsgemäß gemäß Anspruch 1 für die Auftragsschweißung ein Schweißzusatzwerkstoff mit folgender chemischer Zusammensetzung verwendet wird:
16,5 bis 19,0 % Cr
0,15 bis 0,20 % Nb
4,0 bis 4,5 % Ni
1,0 % Mo
0,12 % N
0,7 % Si
1,2 % Mn
0,03 % C
max. 0,025 % S
max. 0,025 % P
Rest Fe und herstellungsbedingte Verunreinigungen
wobei die Streubreite der einzelnen Legierungsanteile +/- 5% beträgt.
Ein Schweißzusatzwerkstoff mit dieser chemischen Zusammensetzung gewährleistet eine geringe Aufmischung bei einer einlagigen Aufschweißung und einen besonders stabilen Verschleißschichtaufbau.

Für den Rolleneinsatz nutzbare Verschleißschichten, die über einen möglichst großen Dickenbereich mit gleicher chemischer Zusammensetzung verfügen, ergeben sich bevorzugt, wenn für die Auftragsschweißung ein Schweißzusatzwerkstoff mit folgender chemischer Zusammensetzung verwendet wird:
16,5 bis 17,0 % Cr
0,15 bis 0,20 % Nb
4,0 % Ni
1,0 % Mo
0,12 % N
0,7 % Si
1,2 % Mn
0,03 % C
max. 0,025 % S
max. 0,025 % P
Rest Fe und herstellungsbedingte Verunreinigungen,
wobei die Streubreite der einzelnen Legierungsanteile +/- 5% beträgt.
Bei einem Schweißzusatzwerkstoff mit dieser chemischen Zusammensetzung kann die Aufmischung bei einer einlagigen Aufschweißung auf einen Wert von 25 bis 30 % eingestellt werden.

Ebenfalls im besonderen Maße für den Rolleneinsatz nutzbare Verschleißschichten, die über einen möglichst großen Dickenbereich mit gleicher chemischer Zusammensetzung verfügen, ergeben sich, wenn für die Auftragsschweißung ein Schweißzusatzwerkstoff mit folgender chemischer Zusammensetzung verwendet wird:
18,5 bis 19,0 % Cr
0,15 bis 0,20 % Nb
4,5 % Ni
1,0 % Mo
0,12 % N
0,7 % Si
1,2 % Mn
0,03 % C
max. 0,025 % S
max. 0,025 % P
Rest Fe und herstellungsbedingte Verunreinigungen
wobei die Streubreite der einzelnen Legierungsanteile +/- 5% beträgt.
Bei einem Schweißzusatzwerkstoff mit dieser chemischen Zusammensetzung kann die Aufmischung bei einer einlagigen Aufschweißung auf einen Wert von 30 bis 35 % eingestellt werden.

Je nach verwendetem Aufschweißverfahren, nämlich dem Open-Arc-Aufschweißverfahren, dem Unter-Pulver-Aufschweißverfahren oder einem Schutzgasschweißverfahren (MAG-Verfahren) und in Abhängigkeit der eingesetzten Schweißaggregate können verschiedene Aufmischungsgrade gefahren werden. Insgesamt ist es möglich, optimale Aufschweißergebnisse mit einem Minimum an speziell komponierten Schweißzusatzwerkstoffen zu erzielten, wenn speziellen Bereichen von Aufmischungsgraden besonders geeignete Schweißzusatzwerkstoffe zugeordnet werden. Insbesondere hat sich herausgestellt, dass mit zwei Aufmischungsbereichen, nämlich dem Aufmischungsbereich von 25% bis 30% und dem Aufmischungsbereich von 30% bis 35% mit zwei speziellen Schweißzusatzwerkstoffen, besonders widerstandsfähige Verschleißschichten auf den in Frage kommenden Grundwerkstoffen hergestellt werden können. Unter diesen Bedingungen können mit einer einlagigen Aufschweißung vergleichbare Verschleißschichtdicken sowie chemischen und mechanischen Eigenschaften der Verschleißschicht erreicht werden, wie bei zwei- oder mehrlagiger Aufschweißung nach dem Stand der Technik.

Dieses Verfahren einer erstmaligen Aufbringung einer Verschleißschicht auf der Mantelfläche einer Rolle ist gleichermaßen bei einer im Anlagenbetrieb bereits abgenutzten Rolle als Reparaturverfahren anwendbar, wenn am Rollenmantel nach dem Abdrehen der verschlissenen Oberflächenbereiche, in einem Ausmaß bis eine saubere Oberfläche erzielt ist, noch ausreichend Grundmaterial für das Aufbringen einer Einlagenaufschweißung vorhanden ist.

Nachdem eine mit einer Rollenaufschweißung versehene Rolle der erfindungsgemäßen Art oder eine Rolle mit anderer Aufschweißung oder Bauart im Anlagenbetrieb die maximal zulässigen Verschleißwerte erreicht hat, wird diese durch eine Reparaturschweißung für einen weiteren Einsatzzyklus vorbereitet. Auch dieses Verfahren zur Wiederherstellung einer verschlissenen Rolle erfolgt mit einer Einlagenschweißung mit den Vorteilen geringeren Arbeitszeitaufwandes, eines geringeren Energieverbrauches und damit insgesamt wesentlich reduzierter Wiederherstellungskosten.

Das Verfahren zum Wiederherstellen einer während des Betriebes abgenützten Rolle der beschriebenen Art durch eine Auftragschweißung gemäß der Erfindung ist in Anspruch 8 definiert.

Zweckmäßig erfolgt das Aufbringen der Aufschweißschicht durch die einlagige Aufschweißung auf dem Grundwerkstoff des Rollenmantels oder des Rollenkörpers mit einer Mindestdicke der Aufschweißschicht von 4,0 mm oder mehr, um eine ausreichend große Verschleißschicht mit gleicher chemischer Zusammensetzung zu erzielen. Vorzugsweise erfolgt das Rückdrehen der Aufschweißschicht auf eine geschlossene einflächige Rollenmanteloberfläche bei Aufrechterhaltung einer Mindestdicke der Verschleißschicht mit gleicher chemischer Zusammensetzung von 2,5 mm oder mehr, wodurch eine entsprechend lange Standzeit der Verschleißschicht erzielt wird.

Der für den Wideraufbau einer Verschleißschicht verfügbare Rollendurchmesser einer Rolle nach dem Abdrehen der beschädigten Verschleißschicht ist maßgeblich von der Art der aufgetretenen Schädigung und vom zulässigen Verschleiß abhängig. Um mit gleichem Schweißzusatzwerkstoff, wie bei der erstmaligen Aufschweißung, die gleiche chemische Zusammensetzung und die gleichen mechanischen Eigenschaften der Verschleißschicht zu erzielen, ist es jedenfalls notwendig, die beschädigte bzw. verschlissene Verschleißschicht bis in den Grundwerkstoff des Rollenkörpers oder des Rollenmantels zu entfernen. Somit ist es notwendig auch die Einbrandzone der Erstaufschweißung zu entfernen. Ohne zusätzliche Maßnahmen führt dies zu einer wiederhergestellten Rolle mit reduziertem Außendurchmesser, jedoch weiterhin gleichen Qualitätsmerkmalen.

Speziell in einer Stranggießanlage ist es für die Aufrechterhaltung eines Gießbetriebes unter konstanten Produktionsbedingungen vorteilhaft, Rollen stets gegen Rollen mit gleichem Durchmesser auszutauschen. Dies wird mit dem erfindungsgemäßen Wiederherstellungsverfahren in einfacher Weise dadurch erreicht, dass nach dem Abdrehen der beschädigten Verschleißschicht auf ein Maß des vom Grundwerkstoff gebildeten Rollenkörpers oder Rollenmantels durch eine Auftragsschweißung eine Aufbaulage auf dem Grundwerkstoff gebildet wird, auf der nachfolgend die Verschleißschicht durch eine einlagige Auftragsschweißung aufgebaut wird, wobei die Schichtdicke der Aufbaulage so gewählt wird, dass der Außendurchmesser der wiederhergestellten Rolle dem Außendurchmesser der ursprünglichen Rolle entspricht. Dies bedeutet, dass der Aufbau der Verschleißschicht beim Wiederherstellungsverfahren mit derselben Schichtdicke erfolgt, wie beim erstmaligen Aufbau der Verschleißschicht auf dem Grundwerkstoff der Rolle.

Zweckmäßig weist der für die Bildung der Aufbaulage verwendete Schweißzusatzwerkstoff dieselbe chemische Zusammensetzung auf wie der Grundwerkstoff des Rollenkörpers oder des Rollenmantels oder besteht aus unlegiertem Stahl, wodurch die Ausgangsbedingungen und damit die chemischen und mechanischen Eigenschaften der Verschleißschicht und deren Schichtdicke und damit die Standzeit der Rolle unverändert bleibt.

Bei Anwendung des Verfahrens zum Wiederherstellen einer während des Betriebes abgenützten Rolle zum Stützen und Transportieren von heißem Gut bleiben die chemische Zusammensetzung des Schweißzusatzwerkstoffes und die Anforderungen an das Aufschweißverfahren hinsichtlich Auswahl des Schweißverfahrens und der Durchführungsbedingungen unverändert, da der Grundwerkstoff unverändert ist. Die in den Unteransprüchen 9 bis 15 für das Verfahren zur Wiederherstellung einer abgenützten Rolle angegebenen zusätzlichen Bedingungen entsprechen daher identisch den in den Unteransprüchen 2 bis 7 angegebenen Bedingungen für das Verfahren zur Herstellung einer Rolle mit erstmaliger einlagiger Aufschweißung.

### Kurzbeschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die folgendes zeigen:
- Fig. 1: die geometrischen Zusammenhänge bei der Erzeugung einer Verschleißschicht durch eine Einlagenschweißung auf einer Rolle zum Stützen und Transportieren von heißem Gut,
- Fig. 2: den Verlauf des Schweißraupenaufbaus auf der Rollenmanteloberfläche auf einer Rolle zum Stützen und Transportieren von heißem Gut,
- Fig. 3: die Oberfläche der Aufschweißung auf einer Bauteiloberfläche oder Rolle,
- Fig. 4: Schliffbild der Schweißverbindung,
- Fig. 5: die geometrischen Zusammenhänge bei der Erzeugung einer Verschleißschicht durch eine Einlagenschweißung beim Widerherstellen einer Rolle zum Stützen und Transportieren von heißem Gut,
- Fig. 6: die geometrischen Zusammenhänge bei der Erzeugung einer Verschleißschicht durch eine Einlagenschweißung auf einer Aufbaulage beim Widerherstellen einer Rolle zum Stützen und Transportieren von heißem Gut.

### Ausführung der Erfindung

Die Bauteiloberfläche oder der Rollenmantel einer Rolle zum Stützen und Transportieren von heißem Gut, speziell von Stranggussprodukten, weist als Grundwerkstoff Stahl auf. Bauteiloberflächen und Rollenmäntel für die erfindungsgemäße Aufschweißung bestehen bevorzugt aus 42CrMo4 oder 16CrMoV511 nach DIN 10083 und sind vergütet. Ein weiterer günstiger Grundwerkstoff für diese Anwendung ist St52-3, nach DIN 10025.

### Beispiel:

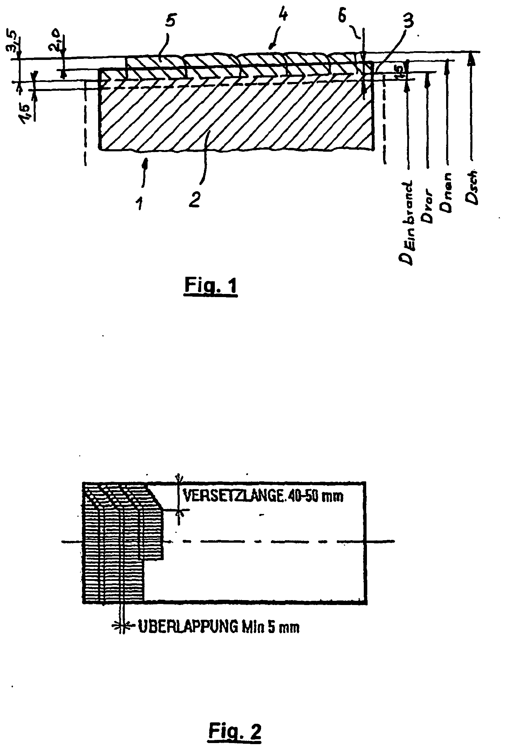

Bei einer Einlagenaufschweißung auf einem Rollenmantel aus 42CrMo4 mit einem Schweißzusatzwerkstoff, der 0,03%C, 0,7%Si, 17,5%Cr, 4,0%Ni, 1,2%Mn, 1,0%Mo, 0,17%Nb und 0,12%N aufweist, verbleibt nach dem Rückdrehen der Aufschweißschicht auf eine geschlossenen einflächige Rollenmanteloberfläche eine Verschleißschicht mit gleicher chemischen Analyse in einer Schichtdicke von 3,0 mm. Diese Verschleißschicht weist dann folgende chemische Zusammensetzung auf: 13,87%Cr; 0,15%Nb; 4,0%Ni; 0,61%Mo; 0,10%N; 0,54%Si; 0,96%Mn; 0,06%C, 0,001%S, 0,043%P; Rest Eisen und herstellungsbedingte Verunreinigungen.
Die Aufschweißung erfolgt nach dem Open-Arc-Schweißverfahren auf der auf 100°C vorgewärmten Rollenmanteloberfläche mit einem Schweißdraht mit 2,4 mm Drahtdurchmesser und einer Schweißdrahtzuführgeschwindigkeit von 6,0 m/min. Die Aufschweißung erfolgt mit einer Pendelfrequenz des Schweißbrenners von 35 Zyklen/min und einer Pendelbreite von 25mm bei einer Überlappung der Schweißraupen von 5 mm. Es wird stets ein einzelner Schweißdraht verwendet. In den Figuren 1 und 2 sind die geometrischen Zusammenhänge näher veranschaulicht.

Figur 1 zeigt in einem Teilschnitt einen aus dem Grundwerkstoff (St52-3) gefertigten Rollenmantel 2 einer Strangführungsrolle 1 mit einer auf das Vordrehmaß Dᵥₒᵣ vorbereiteten Rollenmanteloberfläche 3. Auf dieser erfolgt die einlagige Aufschweißung 4, wie zuvor beschrieben, mit der eine wendelförmig umlaufende Schweißraupe 5 erzeugt wird, wobei der Rollendurchmesser auf den Schweißdurchmesser D_{sch} zunimmt und eine Schichtdicke von 3,5 mm aufgetragen wird. Gleichzeitig bildet sich ein Einbrand im Ausmaß von 1,5 mm bis zum Einbranddurchmesser D_{Einbrand}. Nach dem Rückdrehen der Aufschweißung im Ausmaß von 2 mm bis auf den Rollennenndurchmesser Dₙₑₙ verbleibt eine Verschleißschicht 6 mit einer Schichtdicke von 3mm mit im Wesentlichen gleicher chemischen Zusammensetzung und gleichen Werkstoffeigenschaften. Die Pendelbreite beträgt 25 mm.

Figur 2 veranschaulicht den Schweißraupenaufbau auf der Rollenmanteloberfläche mit der am Rollenmantel umlaufenden Schweißraupe mit der Überlappung von etwa 5 mm und einer Versetzungslage in einem Längenbereich von etwa 40 bis 50 mm, am Rollenumfang gemessen.

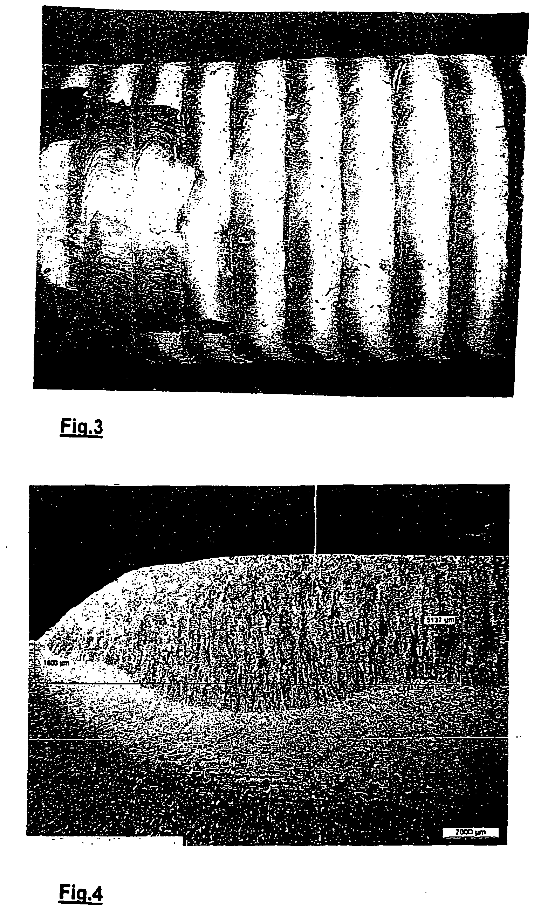

Figur 3 zeigt in einer fotographischen Darstellung die Oberfläche der Aufschweißung mit überlappend angeordneten Schweißraupen entsprechend dem Schweißdurchmesser D_{sch} in Figur 1.. Figur 4 veranschaulicht in einem Schliffbild die Qualität der Aufschweißung und die qualitativ hochwertige Bindung des Schweißzusatzwerkstoffes an den Grundwerkstoff in der Einbrandzone.

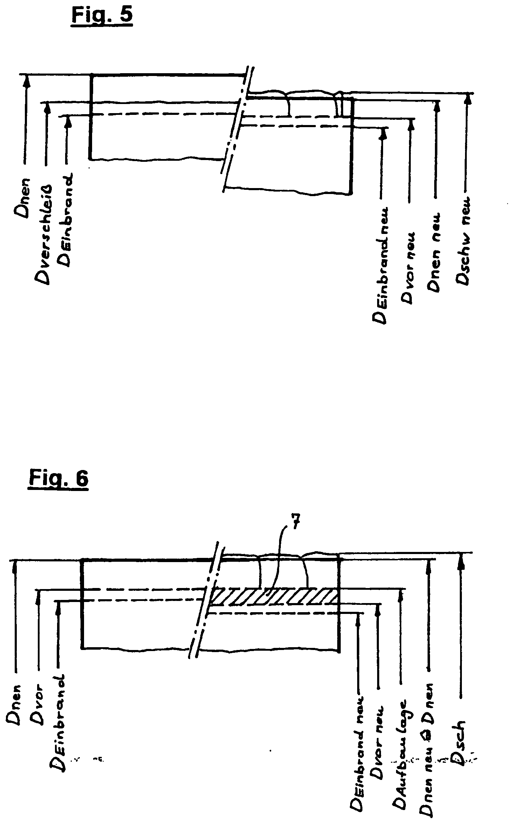

Die Figuren 5 und 6 zeigen in zwei Ausführungsbeispielen Möglichkeiten für die Umsetzung des Verfahrens zur Wiederherstellung einer während des laufenden Betriebes einer Stranggießanlage abgenützten Rolle zum Stützen und Transportieren eines heißen Metallstranges.

In der linken Bildhälfte der Figur 5 ist eine Strangführungsrolle mit einer durch eine einlagige Aufschweißung erzeugte Verschleißschicht dargestellt. Die Verschleißschicht ist durch den Nenndurchmesser Dₙₑₙ der Rolle und den Einbranddurchmesser D_{Einbrand} in ihrer radialen Erstreckung begrenzt. Zusätzlich ist der Verschleißdurchmesser D_{Verschleiß}, der den Rollendurchmesser mit Ablauf der Standzeit der Rolle angibt, dargestellt. In diesem Zustand wird die Rolle dem Wiederherstellungsverfahren unterzogen, welches in der rechten Bildhälfte veranschaulicht ist. Die Rolle wird auf den Vordrehdurchmesser D_{vor neu} abgedreht, der sich innerhalb des Grundwerkstoffes des Rollenkörpers befindet. Auf diese vorbereitete Rollenmanteloberfläche wird mit dem Schweißzusatzwerkstoff eine wendelförmig umlaufende Schweißraupe erzeugt, wobei der Rollendurchmesser auf den Schweißdurchmesser D_{sch neu} zunimmt. Gleichzeitig bildet sich im Grundwerkstoff des Rollenkörpers eine neue Einbrandzone aus, die durch den Einbranddurchmesser D_{Einbrand neu} begrenzt ist. Anschließend erfolgt das Rückdrehen der Schweißraupenoberfläche auf den neuen Rollennenndurchmesser D_{nen neu}, der allerdings kleiner ist als der Rollennenndurchmesser vor Anwendung des Wiederherstellungsverfahrens.

In Figur 6 ist ein erweitertes Verfahren zur Wiederherstellung einer abgenützten Rolle veranschaulicht, bei dem der ursprüngliche Nenndurchmesser der Strangführungsrolle auch nach Anwendung des Wiederherstellungsverfahrens durch Aufbringen einer Aufbaulage wieder erreicht wird. In der linken Bildhälfte ist die Ausgangslage analog zu Figur 5 dargestellt, wobei der Vordrehdurchmesser Dᵥₒᵣ den Ausgangsdurchmesser für die erstmalige einlagige Aufschweißung angibt. Gemäß der Darstellung in der rechten Bildhälfte wird die Rolle auf einen Vordrehdurchmesser D_{vor neu} abgedreht, der sich innerhalb des Grundwerkstoffes des Rollenkörpers befindet. Auf diese vorbereitete Rollenmanteloberfläche wird in einem oder mehreren Schweißlagen eine Aufbaulage 7 mit einem Schweißzusatzwerkstoff gebildet, der der chemischen Zusammensetzung des Grundwerkstoffes des Rollenkörpers entspricht. Beispielsweise wird auf einen Rollenkörper aus St52-3 für die Aufbaulage ebenfalls ein St52-3 als Schweißzusatzwerkstoff eingesetzt. Die Dicke dieser Aufbaulage orientiert sich am angestrebten Rollennenndurchmesser D_{nen neu}, der mit dem ursprünglichen Nenndurchmesser Dₙₑₙ übereinstimmen soll. Dementsprechend wird mit der Auftragsschweißung der Aufbaulage bis zu einem Aufbaulagendurchmesser D_{Aufbaulage} aufgeschweißt, gegebenenfalls unter Berücksichtigung einer zusätzlichen Oberflächenbearbeitung, der dem Vordrehdurchmesser Dvor bei der erstmaligen einlagigen Aufschweißung entspricht. Damit werden für die einlagige, die Verschleißschicht bildende Aufschweißung, wiederum dieselben Ausgangsbedingungen geschaffen, wie sie bei der erstmaligen einlagigen Aufschweißung bestanden. Nach Durchführung der einlagigen Aufschweißung mit dem erfindungsgemäßen Schweißzusatzwerkstoff erfolgt abschließend ein Rückdrehen auf den neuen Nenndurchmesser D_{nen neu}, der mit dem ursprünglichen Nenndurchmesser Dₙₑₙ übereinstimmt.

Solange der Rollenkörper oder der Rollenmantel über eine ausreichende Schichtdicke an Grundmaterial verfügt, kann dieses Verfahren zur Wiederherstellung einer abgenützten Rolle mehrfach wiederholt werden.

## Patentansprüche

1. Verfahren zum Herstellen einer Rolle (1) zum Stützen und Transportieren von heißem Gut, insbesondere von stranggegossenen Stahlsträngen auf einem Rollgang oder in einer Stranggießmaschine, mit einem Rollenkörper, der einen Rollenmantel (2) aus einem Grundwerkstoff und eine durch eine Auftragsschweißung (4) auf dem Grundwerkstoff mit einem Schweißzusatzwerkstoff aufgebrachte Verschleißschicht umfasst, wobei der Grundwerkstoff des Rollenmantels (2) Stahl ist, mit folgenden Schritten:
- Vorbereiten des aus einem Grundwerkstoff gebildeten Rollenmantels (2) oder Rollenkörpers als Drehteil, **gekennzeichnet durch** folgende Schritte:
- Aufbringen einer Aufschweißschicht (4) durch eine einlagige Auftragsschweißung auf dem Grundwerkstoff mit einer Mindestdicke der Aufschweißschicht von 3,5 mm,
- Rückdrehen der Aufschweißschicht (4) auf eine geschlossene einflächige Rollenmanteloberfläche bei Aufrechterhaltung einer Mindestdicke der Verschleißschicht mit gleicher chemischer Zusammensetzung von 1,5 mm oder mehr,
wobei für die Auftragsschweißung ein Schweißzusatzwerkstoff mit folgender Zusammensetzung verwendet wird:
16,5 bis 19,0 % Cr
0,15 bis 0,20 % Nb
4,0 bis 4,5 % Ni
1,0 % Mo
0,12 % N
0,7 % Si
1,2 % Mn
0,03 % C
max. 0,025 % S
max. 0,025 % P
Rest Fe und herstellungsbedingte Verunreinigungen
wobei die Streubreite der einzelnen Legierungsanteile +/- 5% beträgt.

2. Verfahren nach Anspruch 1, **dadurch gekennzeichnet, dass** die Auftragsschweißung auf dem Grundwerkstoff mit einer Mindestdicke der Aufschweißschicht von 4,0 mm oder mehr erfolgt.

3. Verfahren nach Anspruch 1 oder 2, **dadurch gekennzeichnet, dass** das Rückdrehen der Aufschweißschicht (4) auf eine geschlossene einflächige Rollenmanteloberfläche bei Aufrechterhaltung einer Mindestdicke der Verschleißschicht (4) mit gleicher chemischer Zusammensetzung von 2,5 mm oder mehr erfolgt.

4. Verfahren nach einem der Ansprüche 1 bis 3, **dadurch gekennzeichnet, dass** die einlagige Auftragsschweißung nach dem Open-Arc-Aufschweißverfahren, nach dem Unter-Pulver-Aufschweißverfahren oder nach einem Schutzgasschweißverfahren durchgeführt wird.

5. Verfahren nach einem der Ansprüche 1 bis 4, **dadurch gekennzeichnet, dass** als Grundwerkstoff des Rollenmantels (2) Stahl mit bis zu 0,45% C, vorzugsweise mit 0,2 bis 0,45 % C, verwendet wird.

6. Verfahren nach einem der Ansprüche 1 bis 5, **dadurch gekennzeichnet, dass** für die Auftragsschweißung ein Schweißzusatzwerkstoff mit folgender Zusammensetzung verwendet wird:
16,5 bis 17,0 % Cr
0,15 bis 0,20 % Nb
4,0 % Ni
1,0 % Mo
0,12 % N
0,7 % Si
1,2 % Mn
0,03 % C
max. 0,025 % S
max. 0,025 % P
Rest Fe und herstellungsbedingte Verunreinigungen
wobei die Streubreite der einzelnen Legierungsanteile +/- 5% beträgt.

7. Verfahren nach einem der Ansprüche 1 bis 5, **dadurch gekennzeichnet, dass** für die Auftragsschweißung ein Schweißzusatzwerkstoff mit folgender Zusammensetzung verwendet wird:
18,5 bis 19,0 % Cr
0,15 bis 0,20 % Nb
4,5 % Ni
1,0 % Mo
0,12 % N
0,7 % Si
1,2 % Mn
0,03 % C
max. 0,025 % S
max. 0,025 % P
Rest Fe und herstellungsbedingte Verunreinigungen
wobei die Streubreite der einzelnen Legierungsanteile +/- 5% beträgt.

8. Verfahren zum Wiederherstellen einer während des Betriebes abgenützten Rolle (1) zum Stützen und Transportieren von heißem Gut, insbesondere von stranggegossenen Stahlsträngen auf einem Rollgang oder in einer Stranggießmaschine, mit einem Rollenkörper, der einen Rollenmantel (2) aus einem Grundwerkstoff und eine durch eine Auftragsschweißung (4) auf dem Grundwerkstoff mit einem Schweißzusatzwerkstoff aufgebrachte Verschleißschicht (4) umfasst, wobei der Grundwerkstoff des Rollenmantels (2) Stahl ist, mit folgenden Schritten:
- Abdrehen der beschädigten Verschleißschicht auf ein Maß des vom Grundwerkstoff gebildeten Rollenkörpers oder Rollenmantels, **gekennzeichnet durch** folgende Schritte:
- Aufbringen einer Verschleißschicht (4) durch eine einlagige Auftragsschweißung mit einer Mindestdicke der Aufschweißschicht von 3,5 mm oder mehr,
- Rückdrehen der Aufschweißschicht (4) auf eine geschlossene einflächige Rollenmanteloberfläche bei Aufrechterhaltung einer Mindestdicke der Verschleißschicht mit gleicher chemischer Zusammensetzung von 1,5 mm oder mehr,
wobei für die Auftragsschweißung ein Schweißzusatzwerkstoff mit folgender Zusammensetzung verwendet wird:
16,5 bis 19,0 % Cr
0,15 bis 0,20 % Nb
4,0 bis 4,5 % Ni
1,0 % Mo
0,12 % N
0,7 % Si
1,2 % Mn
0,03 % C
max. 0,025 % S
max. 0,025 % P
Rest Fe und herstellungsbedingte Verunreinigungen
wobei die Streubreite der einzelnen Legierungsanteile +/- 5% beträgt.

9. Verfahren nach Anspruch 8, **dadurch gekennzeichnet, dass** die Auftragsschweißung (4) auf dem Grundwerkstoff mit einer Mindestdicke der Aufschweißschicht von 4,0 mm oder mehr erfolgt.

10. Verfahren nach Anspruch 8 oder 9, **dadurch gekennzeichnet, dass** das Rückdrehen der Aufschweißschicht (4) auf eine geschlossene einflächige Rollenmanteloberfläche bei Aufrechterhaltung einer Mindestdicke der Verschleißschicht (4) mit gleicher chemischer Zusammensetzung von 2,5 mm oder mehr erfolgt.

11. Verfahren nach einem der Ansprüche 8 bis 10, **dadurch gekennzeichnet, dass** die einlagige Auftragsschweißung nach dem Open-Arc-Aufschweißverfahren, nach dem Unter-Pulver-Aufschweißverfahren oder nach einem Schutzgasschweißverfahren durchgeführt wird.

12. Verfahren nach einem der Ansprüche 8 bis 11, **dadurch gekennzeichnet, dass** für die Auftragsschweißung ein Schweißzusatzwerkstoff mit folgender Zusammensetzung verwendet wird:
16,5 bis 17,0 % Cr
0,15 bis 0,20 % Nb
4,0 % Ni
1,0 % Mo
0,12 % N
0,7 % Si
1,2 % Mn
0,03 % C
max. 0,025 % S
max. 0,025 % P
Rest Fe und herstellungsbedingte Verunreinigungen
wobei die Streubreite der einzelnen Legierungsanteile +/- 5% beträgt.

13. Verfahren nach einem der Ansprüche 8 bis 11, **dadurch gekennzeichnet, dass** für die Auftragsschweißung ein Schweißzusatzwerkstoff mit folgender Zusammensetzung verwendet wird:
18,5 bis 19,0 % Cr
0,15 bis 0,20 % Nb
4,5 % Ni
1,0 % Mo
0,12 % N
0,7 % Si
1,2 % Mn
0,03 % C
max. 0,025 % S
max. 0,025 % P
Rest Fe und herstellungsbedingte Verunreinigungen
wobei die Streubreite der einzelnen Legierungsanteile +/- 5% beträgt.

14. Verfahren nach einem der Ansprüche 8 bis 10, **dadurch gekennzeichnet, dass** nach dem Abdrehen der beschädigten Verschleißschicht (4) auf ein Maß des vom Grundwerkstoff gebildeten Rollenkörpers oder Rollenmantels (2) durch eine Auftragsschweißung eine Aufbaulage auf dem Grundwerkstoff gebildet wird, auf der nachfolgend die Verschleißschicht (4) durch eine einlagige Auftragsschweißung (4) aufgebaut wird, wobei die Schichtdicke der Aufbaulage so gewählt wird, dass der Außendurchmesser der wiederhergestellten Rolle (1) dem Außendurchmesser der ursprünglichen Rolle (1) entspricht.

15. Verfahren nach Anspruch 11, **dadurch gekennzeichnet, dass** der für die Bildung der Aufbaulage verwendete Schweißzusatzwerkstoff dieselbe chemische Zusammensetzung aufweist wie der Grundwerkstoff des Rollenkörpers oder des Rollenmantels (2) aufweist oder aus unlegiertem Stahl besteht.

## Claims

1. Process for producing a roll (1) for supporting and conveying hot material, in particular continuously cast steel strands, on a roller table or in a continuous casting machine, said roll having a roll body, which comprises a roll shell (2) of a base material and a wearing layer, which is applied to the base material by build-up welding (4) using a weld filler, wherein the base material of the roll shell (2) is steel, said process comprising the following steps:
- the roll shell (2) or roll body formed from a base material is prepared as a rotating part, **characterized by** the following steps:
- a build-up weld layer (4) is applied to the base material by single-layer build-up welding with a minimum thickness of the build-up weld layer of 3.5 mm,
- the build-up weld layer (4) is turned back on a closed, unifacial roll shell surface while maintaining a minimum thickness of the wearing layer having an identical chemical composition of 1.5 mm or more,
wherein a weld filler having the following composition is used for the build-up welding:
16.5 to 19.0% Cr
0.15 to 0.20% Nb
4.0 to 4.5% Ni
1.0% Mo
0.12% N
0.7% Si
1.2% Mn
0.03% C
max. 0.025% S
max. 0.025% P
remainder Fe and manufacturing-related impurities,
where the spread of the individual alloy components is +/- 5%.

2. Process according to Claim 1, **characterized in that** the build-up welding on the base material takes place with a minimum thickness of the build-up weld layer of 4.0 mm or more.

3. Process according to Claim 1 or 2, **characterized in that** the build-up weld layer (4) is turned back on a closed, unifacial roll shell surface while maintaining a minimum thickness of the wearing layer (4) having an identical chemical composition of 2.5 mm or more.

4. Process according to one of Claims 1 to 3, **characterized in that** the single-layer build-up welding is carried out on the basis of the open arc build-up welding process, on the basis of the submerged arc build-up welding process or on the basis of an inert gas welding process.

5. Process according to one of Claims 1 to 4, **characterized in that** steel containing up to 0.45% C, preferably containing 0.2 to 0.45% C, is used as the base material of the roll shell (2) .

6. Process according to one of Claims 1 to 5, **characterized in that** a weld filler having the following composition is used for the build-up welding:
16.5 to 17.0% Cr
0.15 to 0.20% Nb
4.0% Ni
1.0% Mo
0.12% N
0.7% Si
1.2% Mn
0.03% C
max. 0.025% S
max. 0.025% P
remainder Fe and manufacturing-related impurities,
where the spread of the individual alloy components is +/- 5%.

7. Process according to one of Claims 1 to 5, **characterized in that** a weld filler having the following composition is used for the build-up welding:
18.5 to 19.0% Cr
0.15 to 0.20% Nb
4.5% Ni
1.0% Mo
0.12% N
0.7% Si
1.2% Mn
0.03% C
max. 0.025% S
max. 0.025% P
remainder Fe and manufacturing-related impurities,
where the spread of the individual alloy components is +/- 5%.

8. Process for repairing a roll (1), which has become worn during operation, for supporting and conveying hot material, in particular continuously cast steel strands, on a roller table or in a continuous casting machine, said roll having a roll body, which comprises a roll shell (2) of a base material and a wearing layer (4), which is applied to the base material by build-up welding (4) using a weld filler, wherein the base material of the roll shell (2) is steel, said process comprising the following steps:
- the damaged wearing layer is turned to a dimension of the roll body or roll shell formed from the base material, **characterized by** the following steps:
- a wearing layer (4) is applied by single-layer build-up welding with a minimum thickness of the build-up weld layer of 3.5 mm or more,
- the build-up weld layer (4) is turned back on a closed, unifacial roll shell surface while maintaining a minimum thickness of the wearing layer having an identical chemical composition of 1.5 mm or more,
wherein a weld filler having the following composition is used for the build-up welding:
16.5 to 19.0% Cr
0.15 to 0.20% Nb
4.0 to 4.5% Ni
1.0% Mo
0.12% N
0.7% Si
1.2% Mn
0.03% C
max. 0.025% S
max. 0.025% P
remainder Fe and manufacturing-related impurities,
where the spread of the individual alloy components is +/- 5%.

9. Process according to Claim 8, **characterized in that** the build-up welding (4) on the base material takes place with a minimum thickness of the build-up weld layer of 4.0 mm or more.

10. Process according to Claim 8 or 9, **characterized in that** the build-up weld layer (4) is turned back on a closed, unifacial roll shell surface while maintaining a minimum thickness of the wearing layer (4) having an identical chemical composition of 2.5 mm or more.

11. Process according to one of Claims 8 to 10, **characterized in that** the single-layer build-up welding is carried out on the basis of the open arc build-up welding process, on the basis of the submerged arc build-up welding process or on the basis of an inert gas welding process.

12. Process according to one of Claims 8 to 11, **characterized in that** a weld filler having the following composition is used for the build-up welding:
16.5 to 17.0% Cr
0.15 to 0.20% Nb
4.0% Ni
1.0% Mo
0.12% N
0.7% Si
1.2% Mn
0.03% C
max. 0.025% S
max. 0.025% P
remainder Fe and manufacturing-related impurities,
where the spread of the individual alloy components is +/- 5%.

13. Process according to one of Claims 8 to 11, **characterized in that** a weld filler having the following composition is used for the build-up welding:
18.5 to 19.0% Cr
0.15 to 0.20% Nb
4.5% Ni
1.0% Mo
0.12% N
0.7% Si
1.2% Mn
0.03% C
max. 0.025% S
max. 0.025% P
remainder Fe and manufacturing-related impurities,
where the spread of the individual alloy components is +/- 5%.

14. Process according to one of Claims 8 to 10, **characterized in that,** after the damaged wearing layer (4) is turned to a dimension of the roll body or roll shell (2) formed from the base material, a build-up layer is formed on the base material by build-up welding, on which layer the wearing layer (4) is then built up by single-layer build-up welding (4), the layer thickness of the build-up layer being selected such that the external diameter of the repaired roll (1) corresponds to the external diameter of the original roll (1).

15. Process according to Claim 11, **characterized in that** the weld filler used to form the build-up layer has the same chemical composition as the base material of the roll body or of the roll shell (2), or consists of unalloyed steel.

## Revendications

1. Procédé de fabrication d'un rouleau (1) de soutien et de transport de produits chauds, en particulier de barres d'acier coulées en continu, sur une piste à rouleaux ou dans une machine de coulée continue, présentant un corps de rouleau qui comporte une enveloppe (2) de rouleau en un matériau de base et une couche d'usure appliquée par soudage d'apport (4) sur le matériau de base à l'aide d'un matériau d'apport de soudure, le matériau de base de l'enveloppe (2) du rouleau étant l'acier, comportant les étapes suivantes :
- préparation du corps de rouleau formé du matériau de base ou de l'enveloppe (2) du rouleau sous la forme d'une pièce tournée, **caractérisé par** les étapes suivantes :
- application d'une couche (4) d'apport de soudure par soudage d'apport de soudure en une couche sur le matériau de base à une épaisseur minimale de 3,5 mm de la couche d'apport de soudure,
- retournage de la couche (4) d'apport de soudure sur une surface fermée unitaire de l'enveloppe de rouleau en maintenant dans la couche d'usure une épaisseur minimale de composition chimique uniforme de 1,5 mm ou davantage,
étant utilisé pour le soudage d'apport un matériau d'apport de soudure présentant la composition suivante :
16,5 à 19,0 % de Cr
0,15 à 0,20 % de Nb
4,0 à 4,5 % de Ni
1,0 % de Mo
0,12 % de N
0,7 % de Si
1,2 % de Mn
0,03 % de C
au plus 0,025 % de S
au plus 0,025 % de P
le reste étant Fe et les impuretés inévitables
la plage de dispersion des différentes portions d'alliage étant de ± 5 %.

2. Procédé selon la revendication 1, **caractérisé en ce que** le soudage d'apport s'effectue sur le matériau de base à une épaisseur minimale de la couche d'apport de soudure de 4,0 mm ou davantage.

3. Procédé selon les revendications 1 ou 2, **caractérisé en ce que** le retournage de la couche (4) d'apport de soudure sur une surface fermée unitaire de l'enveloppe du rouleau s'effectue en maintenant une épaisseur minimale de la couche d'usure (4) de composition chimique uniforme de 2,5 mm ou davantage.

4. Procédé selon l'une des revendications 1 à 3, **caractérisé en ce que** le soudage d'apport en une couche est réalisé par une opération de soudage d'apport à arc ouvert, par une opération de soudage d'apport sous poudre ou par un procédé de soudage sous gaz protecteur.

5. Procédé selon l'une des revendications 1 à 4, **caractérisé en ce qu'**il utilise comme matériau de base de l'enveloppe (2) du rouleau de l'acier contenant jusque 0,45 % de C et de préférence de 0,2 à 0,45 % de C.

6. Procédé selon l'une des revendications 1 à 5, **caractérisé en ce qu'**il utilise pour le soudage d'apport un matériau d'apport de soudure qui présente la composition suivante :
16,5 à 17,0 % de Cr
0,15 à 0,20 % de Nb
4,0 % de Ni
1,0 % de Mo
0,12 % de N
0,7 % de Si
1,2 % de Mn
0,03 % de C
au plus 0,025 % de S
au plus 0,025 % de P
le reste étant Fe et les impuretés inévitables
la plage de dispersion des différentes portions d'alliage étant de ± 5 %.

7. Procédé selon l'une des revendications 1 à 5, **caractérisé en ce qu'**il utilise pour le soudage d'apport un matériau d'apport de soudure qui présente la composition suivante :
18,5 à 19,0 % de Cr
0,15 à 0,20 % de Nb
4,5 % de Ni
1,0 % de Mo
0,12 % de N
0,7 % de Si
1,2 % de Mn
0,03 % de C
au plus 0,025 % de S
au plus 0,025 % de P
le reste étant Fe et les impuretés inévitables,
la plage de dispersion des différentes portions d'alliage étant de ± 5 %.

8. Procédé de réparation d'un rouleau (1) usé en fonctionnement et servant à soutenir et transporter un produit chaud, en particulier des barres d'acier de coulée continue sur une piste à rouleaux ou dans une machine de coulée continue, présentant un corps de rouleau qui comporte une enveloppe (2) de rouleau en un matériau de base et une couche d'usure (4) appliquée par soudage d'apport (4) sur le matériau de base à l'aide d'un matériau d'apport de soudure, le matériau de base de l'enveloppe (2) du rouleau étant l'acier, comportant les étapes suivantes :
- tournage de la couche d'usure endommagée à une dimension du corps de rouleau formé du matériau de base ou de l'enveloppe du rouleau,
**caractérisé par** les étapes suivantes :
- application d'une couche d'usure (4) par soudage d'apport de soudure en une couche sur le matériau de base à une épaisseur minimale de 3,5 mm de la couche d'apport de soudure ou davantage,
- retournage de la couche (4) d'apport de soudure sur une surface fermée unitaire de l'enveloppe du rouleau en maintenant dans la couche d'usure une épaisseur minimale de composition chimique uniforme de 1,5 mm ou davantage,
étant utilisé pour le soudage d'apport un matériau d'apport de soudure présentant la composition suivante :
16,5 à 19,0 % de Cr
0,15 à 0,20 % de Nb
4,0 à 4,5 % de Ni
1,0 % de Mo
0,12 % de N
0,7 % de Si
1,2 % de Mn
0,03 % de C
au plus 0,025 % de S
au plus 0,025 % de P
le reste étant Fe et les impuretés inévitables
la plage de dispersion des différentes portions d'alliage étant de ± 5 %.

9. Procédé selon la revendication 8, **caractérisé en ce que** le soudage d'apport (4) s'effectue sur le matériau de base à une épaisseur minimale de la couche d'apport de soudure de 4,0 mm ou davantage.

10. Procédé selon la revendication 8 ou 9, **caractérisé en ce que** le retournage de la couche (4) d'apport de soudure sur une surface fermée unitaire de l'enveloppe du rouleau s'effectue en maintenant une épaisseur minimale de la couche d'usure (4) de composition chimique uniforme de 2,5 mm ou davantage.

11. Procédé selon l'une des revendications 8 à 10, **caractérisé en ce que** le soudage d'apport en une couche est réalisé par une opération de soudage d'apport à arc ouvert, par une opération de soudage d'apport sous poudre ou par un procédé de soudage sous gaz protecteur.

12. Procédé selon l'une des revendications 8 à 11, **caractérisé en ce qu'**il utilise pour le soudage d'apport un matériau d'apport de soudure qui présente la composition suivante :
16,5 à 17,0 % de Cr
0,15 à 0,20 % de Nb
4,0 % de Ni
1,0 % de Mo
0,12 % de N
0,7 % de Si
1,2 % de Mn
0,03 % de C
au plus 0,025 % de S
au plus 0,025 % de P
le reste étant Fe et les impuretés inévitables
la plage de dispersion des différentes portions d'alliage étant de ± 5 %.

13. Procédé selon l'une des revendications 8 à 11, **caractérisé en ce qu'**il utilise pour le soudage d'apport un matériau d'apport de soudure qui présente la composition suivante :
18,5 à 19,0 % de Cr
0,15 à 0,20 % de Nb
4,5 % de Ni
1,0 % de Mo
0,12 % de N
0,7 % de Si
1,2 % de Mn
0,03 % de C
au plus 0,025 % de S
au plus 0,025 % de P
le reste étant Fe et les impuretés inévitables
la plage de dispersion des différentes portions d'alliage étant de ± 5 %.

14. Procédé selon l'une des revendications 8 à 10, **caractérisé en ce qu'**après le retournage de la couche d'usure (4) endommagée à une dimension du corps de rouleau formé du matériau de base ou de l'enveloppe (2) du rouleau, une couche de réparation est formée sur le matériau de base par soudage d'apport, la couche d'usure (4) étant formée ensuite sur cette couche de réparation par un soudage d'apport (4) en une couche, l'épaisseur de la couche de réparation étant sélectionnée de telle sorte que le diamètre extérieur du rouleau (1) réparé corresponde au diamètre extérieur du rouleau (1) initial.

15. Procédé selon la revendication 11, **caractérisé en ce que** le matériau d'apport de soudure utilisé pour la formation de la couche de réparation présente la même composition chimique que le matériau de base du corps de rouleau ou de l'enveloppe (2) du rouleau ou est constitué d'acier non allié.
